# EUROPEAN PATENT SPECIFICATION

(11) **EP 2 363 629 B1**
(45) Date of publication and mention of the grant of the patent: **24.10.2012**
(21) Application number: 11001876.9
(22) Date of filing: 29.11.2008
(51) Int. Cl.: F17C 5/06, F17C 7/00

(54) **Warming system for fiber composite gas storage devices**
Erwärmungssystem für Gasspeichervorrichtungen aus Faserverbundwerkstoff
Système de chauffage pour dispositifs de stockage de gaz à fibre composite

(30) Priority: 30.11.2007 US 947813; 30.11.2007 US 947816; 30.11.2007 US 947820
(43) Date of publication of application: 07.09.2011
(62) Divisional of application: 08870979.5
(73) Proprietor: Honda Motor Co., Ltd., Minato-ku Tokyo 107-8556 (JP)
(72) Inventor: Handa, Kiyoshi, Raymond- OH 43067-9705 (US)
(74) Representative: Beresford, Keith Denis Lewis

(56) References cited:
- EP-A2- 1 538 390
- DE-A1- 3 530 806
- DE-U1- 8 810 343
- FR-A- 1 379 049
- JP-A- 63 026 498
- US-A1- 2007 204 631

## Description

### FIELD OF THE INVENTION

The invention relates to a heating system for high pressure storage tanks for hydrogen, CNG and other industrial gases, by compensating for thermal and mechanical stresses caused by a low system temperatures resulting from gas decompression in a vehicle tank during driving as fuel gas is depleted from a storage tank and environmental exposure of storage tanks in low temperature climate conditions. Heating is accomplished by utilizing an electrical induction heating system to warm a liner in the tank or the polymer fiber composite forming the tank shell. Warming reduces the risk of a fuel gas leak in cold climate driving conditions, tank durability is increased the because the internal temperature differences between the stored gas and the tank are reduced, and temperature differences between seals and gas flow devices associated with the tank and gas flow controls, that otherwise would cause mechanical stresses, are minimized.

### BACKGROUND OF THE INVENTION

Vehicles powered by compressed natural gas (CNGV) and hydrogen gas (FCV) typically include on board high pressure gas fuel tanks that may include gas absorbing materials within the tank interior. During driving, the gas inside the tanks becomes cold, caused by the tank pressure decreasing when gas is consumed by the vehicle power plant resulting in decompression of the tank. Gas absorbing materials used in the tank interior will absorb the intrinsic heat in the gas during the gas discharge from the tank during vehicle operation. In cold climates, the internal gas temperature in the tank can drop to -60°C or below, a temperature that may be below the permissible operating temperature of 0-rings, or other rubber seals, or gas flow controls in the tank. An excessively low temperature in the tank may upset design tolerance limits for the seals and flow controls and cause the stored gas to leak as a result of temperature caused stresses in the tank system assembly. As an example, when the ambient temperature is -20°C, the reduction of internal tank temperature by an additional -40°C due to gas decompression effects will result in an internal temperature in the gas tank of -60°C. Expansion and contraction of the tank and the component parts of the gas flow system associated with the tank may produce adverse mechanical stress effects. In the specification, reference to high pressure gas powered vehicles includes the utilization of hydrogen gas to power fuel cells (FCVs) and internal combustion engines and the use of correlates with the use of the invention with compressed natural gas to power internal combustion engines (CNGVs). Although hydrogen is typically referred to in the specification and examples, the term "hydrogen" is, in most instances, intended to be interchangeable with CNG and other fuel gases. Fuel gases are referred to as a "gas" or "high pressure gas."

Closest prior art, German patent application no. DE 3530806 A1, discloses a method of heating a compressed gas cylinder to expel residual moisture by heating the compressed gas cylinder with an inductive heating coil which surrounds at least a part of the length of the compressed gas cylinder.

### OBJECTS OF THE INVENTION

It is an object of the present invention to provide warming systems for a high pressure tank utilizing the inherent electrically conductive characteristics of a carbon fiber tank and/or the tank liner to warm the tank and the gas therein by using an electrical induction heating coil wound around the tank whereby electrical current passing through the coil warms the tank wall and/or the tank liner.

It is a further object to reduce the risk of a fuel gas leak in cold climate driving conditions caused by excessively low tank and / or gas temperatures. As a result, tank durability is increased, the internal temperature difference between the stored gas in the tank and the tank wall is reduced, and other components of the tank gas flow and control system are warmed. The lower extent of temperature fluctuations of a driving cycle in the tank is reduced.

The invention is described more fully in the following description of the preferred embodiment considered in view of the drawings in which:

### BRIEF DESCRIPTION OF THE SEVERAL VIEWS OF THE DRAWINGS

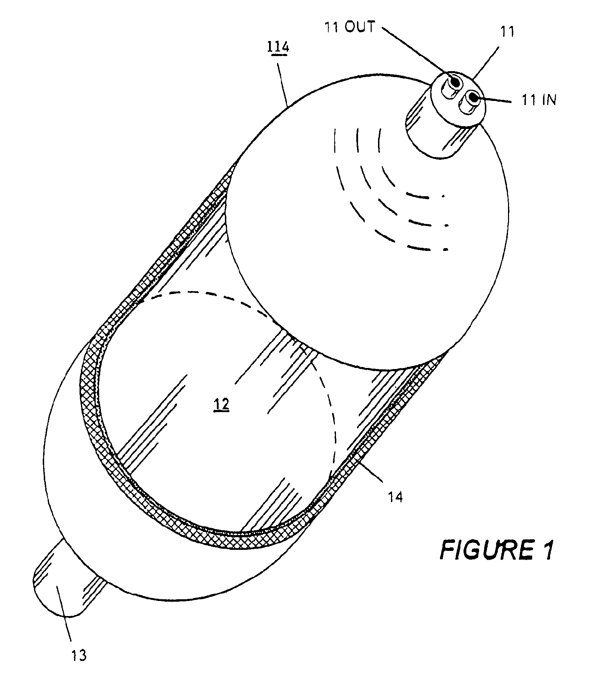

Figure 1 is a cut away view showing a typical cylindrical high pressure gas storage tank formed from a carbon composite material wherein a carbon fiber strand material is impregnated within an epoxy or other resin binder. The tank shown includes a metal boss at each end and inlet and outlet gas flow components embedded within the boss at one end, and an interior volume.

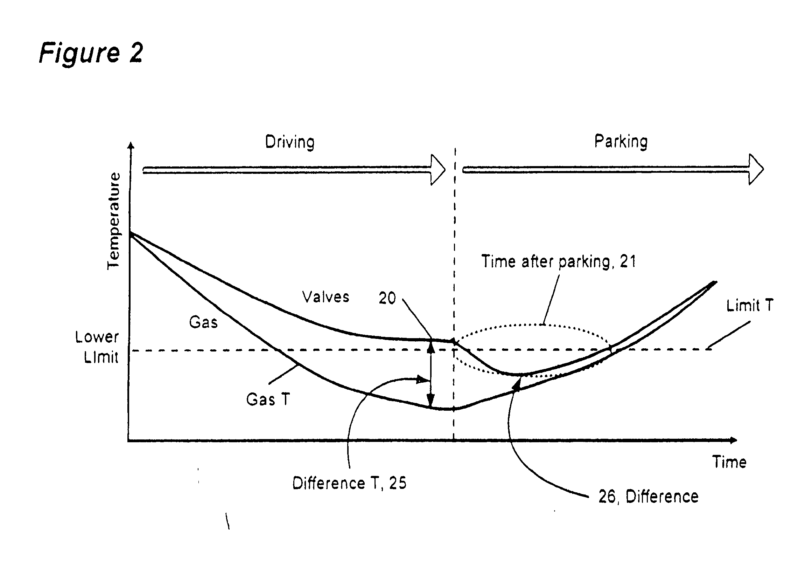

Figure 2 is a chart of gas and valve temperatures of the tank plotted against a time axis depicting relative temperatures of the gas within the tank and the metal boss elements during the vehicle conditions of driving and parking. The cooling of the metal components after driving is shown wherein valve temperatures are below the lower tolerance limit after driving.

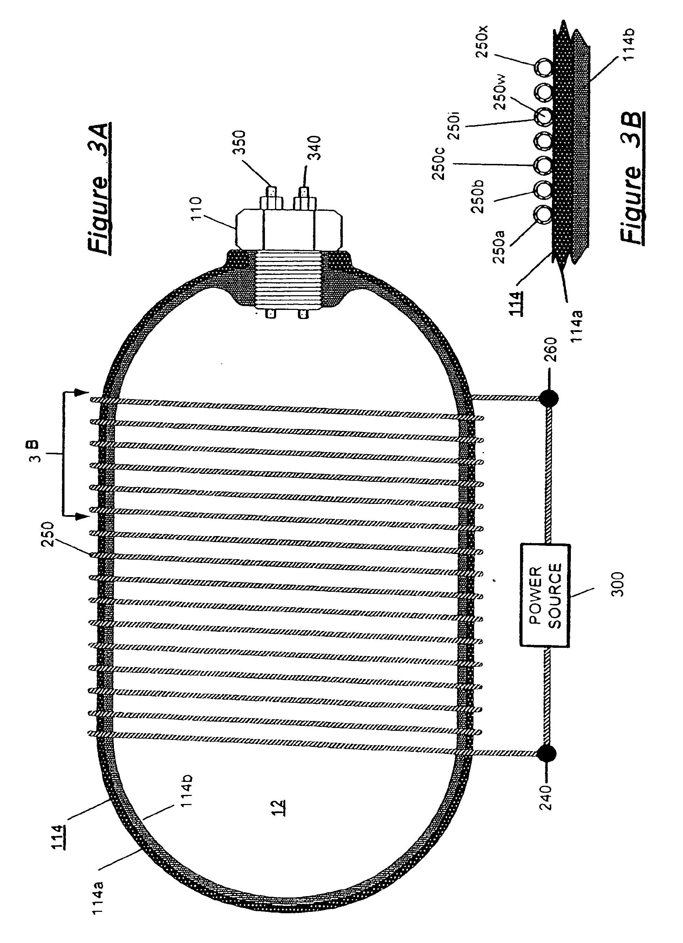

Figures 3A and 3B. 4A, and 4B, 5A and 5B, 6, 7A, 7B and 7C show examples of warming systems utilizing an induction coil associated with the tank perimeter.

Figure 3A is a side view of a tank and warming system of the invention wherein an induction coil wound around the external diameter of the tank is interconnected with an electric power source to provide heating for the gas and tank. Figure 3B is a cross section of the upper side of the tank wall in Figure 3A indicated as 3B→ ←3B.

Figure 4A is a cross section view of an example of a warming system of the invention wherein the induction coil is embedded within the 4 tank wall. Figure 4B is a cross section of the longitudinally extending side of the tank wall in Figure 4A indicated as 4B→ ←4B.

Figure 5A is a cross section view of an example of a warming system of the invention wherein the induction coil is wound around the external diameter of a tank that includes a metal liner. Figure 5B is a cross section of a longitudinally extending side of the tank wall in Figure 5A indicated as 5B→ ←5B showing the induction coil, fiber tank shell and metal liner.

Figure 6 illustrates a temperature control system utilized in the invention showing the heating system of Figure 3A as an example,

Figures 7A, 7B and 7C show additional configurations of inductively active materials or compositions included in the tank structure to provide additional heat to the bottom area and achieve a more uniform temperature.

### DETAILED DESCRIPTION OF THE INVENTION

In brief, the invention provides a warming system for high pressure gas storage tanks utilized on high pressure gas fueled vehicles including vehicles powered by compressed natural gas, CNG, and fuel cell and internal combustion engines powered by hydrogen gas. In many examples, such vehicles include gas fuel tanks that may include gas absorbing materials in the interior of the tank. During driving, the gas cools because a decrease in the tank pressure occurs. When a vehicle tank includes gas absorbing materials, the gas absorbing materials absorb heat during the gas discharge from the tank further contributing to the cooling effect. Environmentally, a typical ambient temperature is approximately 20°C. In cold climates, the internal gas temperature in a vehicle tank can drop to -60°C or below, a temperature that may be below the permissible operating temperature range of O-ring and/or other rubber or polymer seals used in the tank and the port inlet and outlet metal part assemblies that control the inflow and outflow of gas to and from the storage tank. Below the acceptable temperature range, variances allowable for seals, valves, control devices, and the like, may be exceeded by thermally caused mechanical variations in the tank and associated assemblies. Leakage of the stored gas may result.

With reference to Figure 1, high pressure tanks are typically cylindrical with semi spherically shaped domed ends and are formed from a carbon composite shell, a mixture of resin and carbon fiber and may also include supplemental shells such as an outer shell and an interior liner sandwiching a carbon fiber middle layer. Figure 1 shows a typical high pressure gas storage tank 114 having an interior volume 12 for the storage of gas with sidewall 14, including a first boss 11 and second boss 13 at either end. A gas inlet and gas outlet are shown at boss 11 as 11 in and 11 out. A fiber sidewall may usually include an interior liner.

Driving and parking temperature conditions in the vehicle tank system are charted in Figure 2. During driving, the gas temperature, Gas T, may exceed the lower tolerance limit, for example, of the flow control system, Limit T, by the temperature difference shown as Difference T, 25. Figure 2 illustrates a parking condition, wherein, with time, the temperature 20 of the valve/control/mechanical parts system cools to a difference 25, such that, in the period after parking 21, the valve temperature 20 cools to temperature 26, below the lower acceptable limit of temperature tolerance.

### EXAMPLE I

In an embodiment, conventionally designed tanks can be used with the invention without any substantial change because of the inherent electromagnetic characteristics of the materials from which the tank and/or liner are formed. Higher heating efficiency is achieved in comparison with an external heater because the tank is heated directly.

Here, the invention includes a tank wall lining formed from one or more metals selected from the group of iron, stainless steel, titanium, magnesium, tin, nickel, zinc, chromium (Fe, SUS, Nichrome®, (a brand name for a non-magnetic alloy of nickel and chromium) or an alloy of the foregoing, and similar inductively active materials or compositions. In examples, a tank lining formed from the inductively active materials or compositions partially surrounds the tank interior volume. In instances where it is expected that the bottom of the tank interior will have a lower temperature, additional inductively active materials or compositions are included in the tank structure at the tank bottom so as to provide additional heat to the bottom area to achieve a more uniform temperature.

Thus, where the typical high pressure gas tank for motor vehicles is formed from a carbon fiber composite shell (carbon fiber resin polymer, "CFRP") and an internal liner is formed from aluminum or plastic, the invention allows minor variations in tank composition to achieve tank heating; a minor change in tank formulation materials is required to obtain induction heating characteristics wherein heat from the induction heater results from eddy currents generated in the material. Preferred characteristics of tank components include the electrical and electromagnetic characteristics of the tank and shell wherein one or both of the shell and the liner require only an electrical resistance. As examples, a plastic liner will have a non-conductive resistance in the range of over 10^6 ohm*m. In contrast, an aluminum liner will have a resistance of about 2.65 x 10^ -8 ohm*m. The carbon fiber resin polymer shell will have a resistance of 1-2 x10 ^ -5 ohm*m. AC current frequency to the induction coil in the invention will be in the range of 20Hz to 5OkHz.

To adapt the tank to the induction heating system of the invention, the preferred composite materials and their characteristics are that a) the shell is made electrically non-conductive; b) the shell is made ferromagnetically active; and/or c) the liner is made ferromagnetically active. In this regard, for the liner, aluminum is too low in electrical resistance to be heated up. Plastic is too high in electrical resistance to be heated up.

A CFRP shell is a useful material in the invention without any change when used with inductively active components. The CFRP shell composition may be modified, however, to achieve induction heating characteristics by the addition in the fabrication process of a fiber, such as a steel wool strand, or a powder (iron) which has ferromagnetic or conductive properties.

Figure 3A and Figure 3B show an example of the invention wherein induction heating warms either the composite shell 114a or the metal liner 114b, or both of the fiber composite gas tank 114. In Figure 3 3A, component parts of an example of a complete tank system are shown: tank 114, composite shell 114a and liner 114b, interior volume for gas storage 12, boss 110 and gas flow conduits, external inlet 340 for gas refueling and external outlet conduit 350 for depletion of gas during driving. The gas flow conduits embedded in the metal boss may also have embedded therein (not shown) one or more of check valves, a pressure regulator and control valves in each of conduits 340 and 350 for regulating gas pressure and direction of flow. Induction coil 250 is wound around the external diameter of the tank and connected through terminals 240 and 260 to an electrical power source 300 on the vehicle providing a flow of current to the induction coil for warming the tank components 114a or 114b, depending on their electromagnetic characteristics when subjected to the electromagnetic field created by the activated induction coil 250. Figure 3B is a detail of a section of tank wall, 3B in Figure 3A, showing the individual electrically conductive wire strands 250a, 250b, 250c, 25⊙x, ..., formed from an electrically conductive core wire 250w insulated by sheath 250i, wound around the tank.

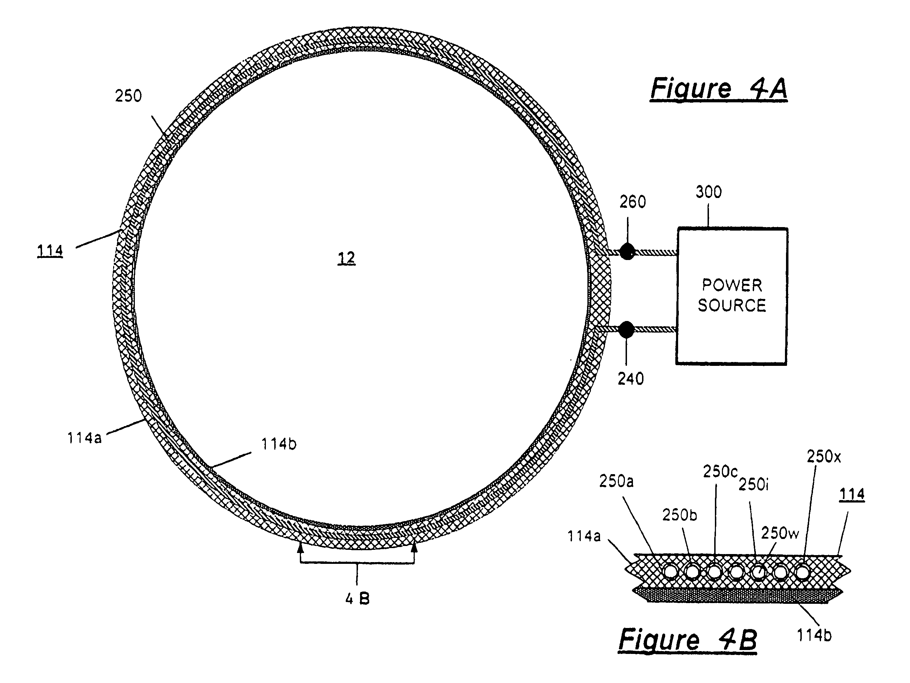

Figure 4A is a side view of a warming system of the invention wherein the induction coil 250 is embedded within the fiber composite layer of the tank wall interconnected with an on board electrical power source 300 through terminals 240 and 260. Figure 4B is a cross section of the longitudinally extending side of the tank wall in Figure 4A indicated as 4B→ ←4B. The induction current warms the tank components, shell 114a or liner 114b, depending on their electromagnetic characteristics, when subjected to the electromagnetic field created by the activated induction coil 250.

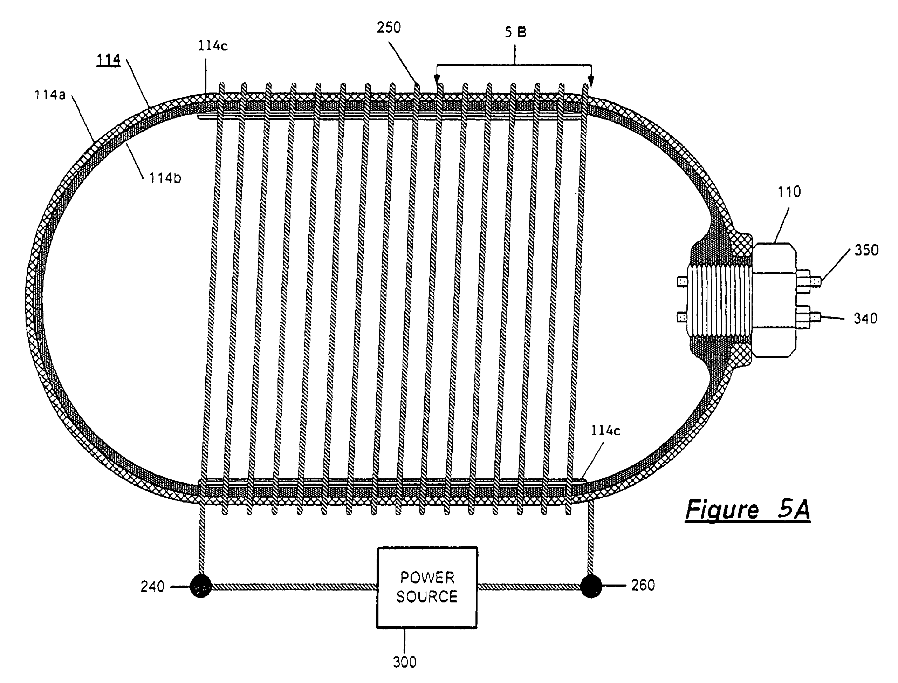

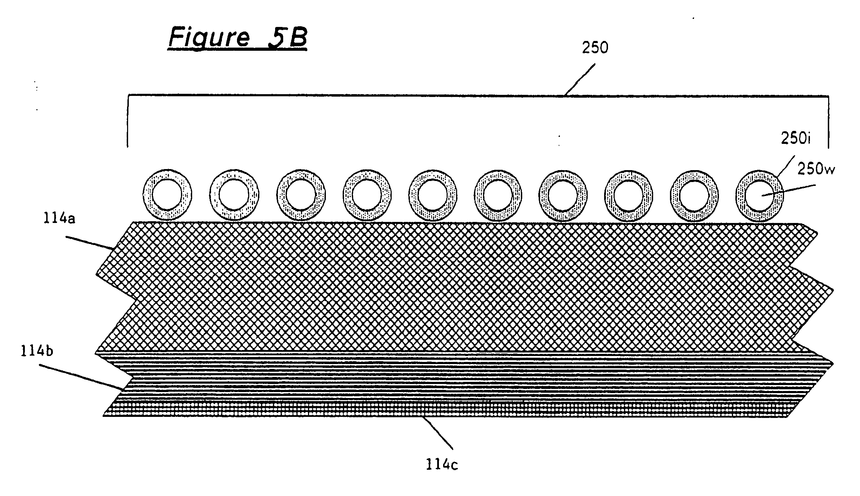

Figure 5A is a cross section view of an example of a warming system of the invention wherein the induction coil 250 is wound around the external diameter of a tank that includes a non conductive, both electrically and electromagnetically, outer composite shell 114a and an electromagnetically active ferrous metal liner 114c. Figure 5B is a cross section of a side of the tank wall in Figure 5A indicated as 5B→ ←5B showing the induction coil, fiber tank shell and metal liner.

Figure 5B depicts a section detail of the tank wall in Figure 5A. showing the individual electrically conductive, insulated wire strands 250a, 250b, 250c, 250k, ... wound around the tank outer shell with the insulation 250i and the conductive core 25⊙w also shown.

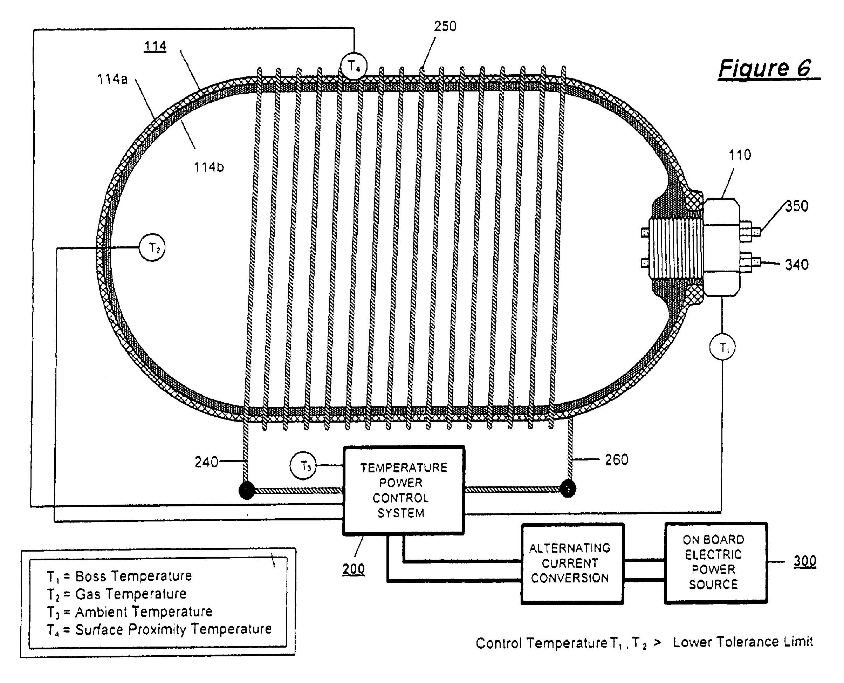

Figure 6 illustrates a temperature control system utilized in the invention showing the heating system of Figure 3A as an example wherein temperature sensors T₁ (boss), T₂ (gas), T₃ (ambient), and T₄ (Surface coil) provide temperature measurement input into the control system 200, respectively for valve and boss temperature T₁ gas temperature in the tank T₂ volume 12, ambient temperature T₃, and tank surface proximity temperature T₄. Temperature control system 200 maintains the flow of electric power from the on board source 300 to the wired coil electrodes 240 and 260 that generate the heating effect. Power is regulated such that "Control Temperature: T₁, T₂ > Lower Tolerance Limit [of the tank and valve system]". With reference to Figure 2 showing tank and valve system temperatures in various operating modes for the vehicle, the control system 200 will heat the system such that the temperature differentials shown as Difference t, 25 and 26, Difference in Figure 2 are eliminated and the lower tolerance limit, Limit T, of the system is not exceeded.

Thus, induction heat warms the gas tank itself and an internal induction coil can work as well or better. Because the metal liner or carbon layer has an electromagnetic characteristic, each can be heated up by the Induction heating coil. Conventional tanks can be used without significant change in design, provided that the electromagnetic characteristics are consistent with the teachings of the examples set out above. Higher heating efficiency than an external heater is achieved because the tank itself is heated directly. The on board electrical power source system for providing an alternating current to the induction coil is electrically isolated from the tank. Thus in the invention, induction current flow heats the electromagnetic or ferromagnetic active elements of the tank construction in which eddy currents are generated within the tank materials and the intrinsic resistance or conductivity of the tank or liner, or both, leads to Joule heating. The coil around the tank produces an electromagnetic field when a high- frequency alternating current (AC) is passed through the coil from the on board power source. Preferably, the on board power source comprises an AC power supply that produces a high frequency of low voltage and high current. Useful frequencies include alternating currents in the range of 20Hz to 50kHz. The number of turns of the induction coil influences the efficiency and field pattern of the warming effect desired.

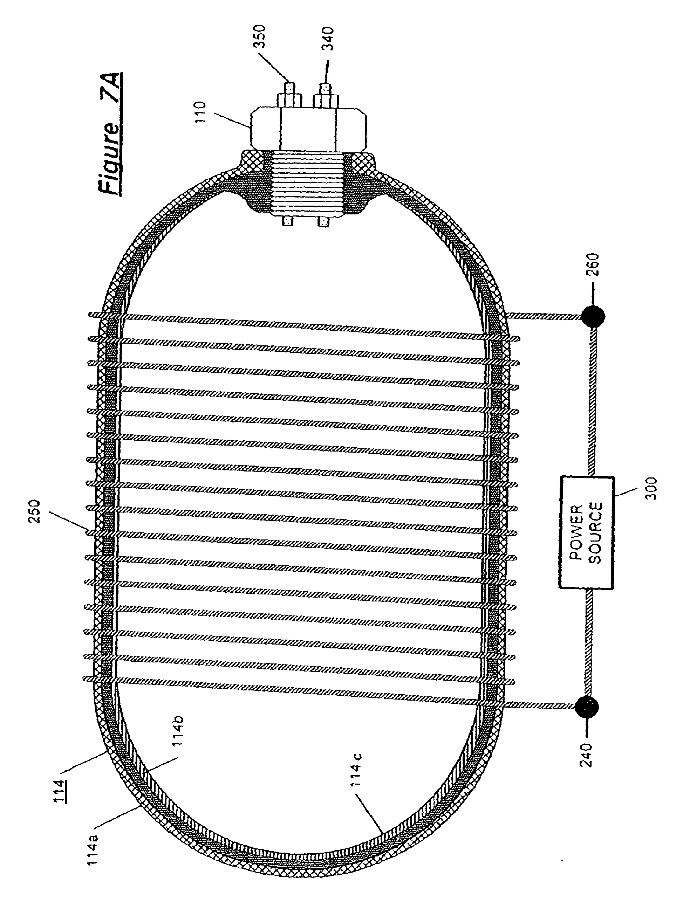

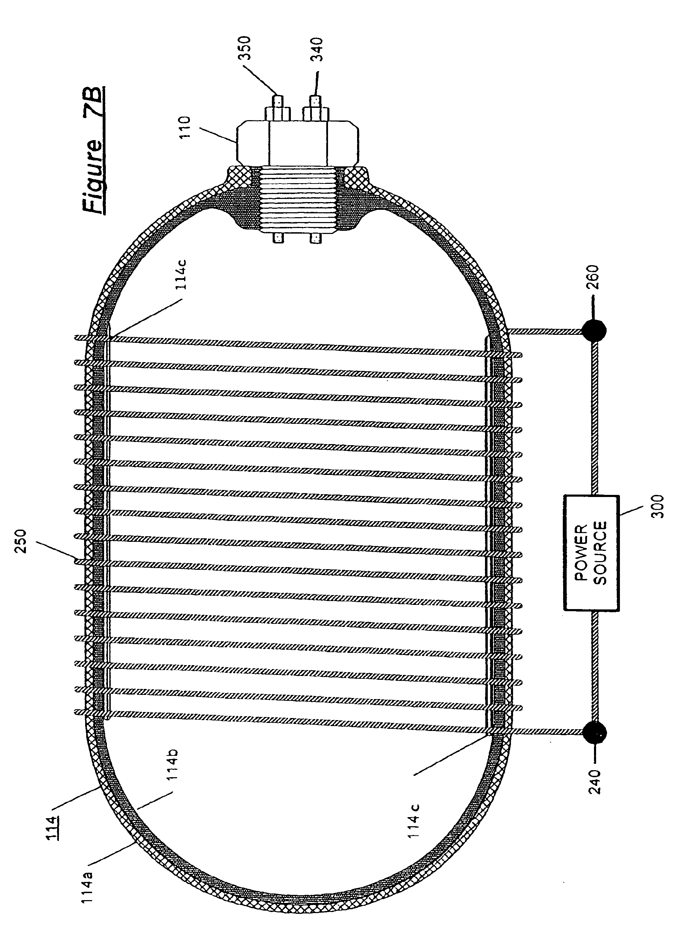

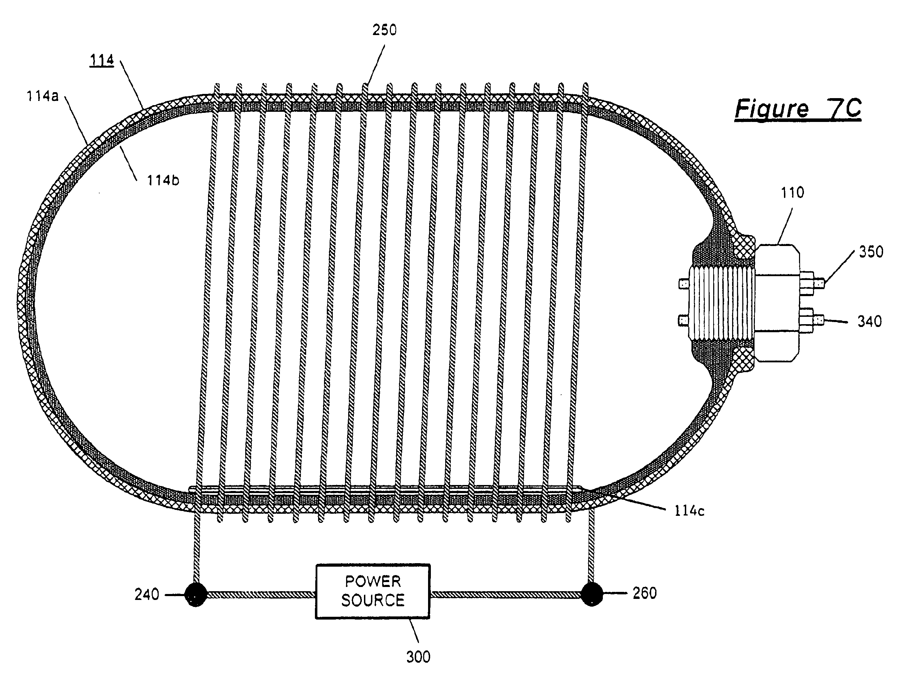

In Figure 7A, a cross section of an alternately formed tank wall composition useful in the invention is shown wherein conventional CFRP shell 114a and plastic liner 114b form a tank structure surrounded by induction coil 250 and a sheet, foil, mesh or fiber interior lining 114c is provided as an inductively active heating element. In the application of the induction current, a lower frequency electromagnetic field can penetrate through the tank wall; the field strength is partly diminished by absorption in the CFRP. The remaining induction energy can work inside of the tank heating interior lining 114c. The lining to be heated in the tank is preferably formed from Fe, SUS, Nichrome®, Ti, Mn, Sn, Ni, Zn, Cr, an alloy of the foregoing, and similar inductively active materials or compositions. Figure 7B depicts a tank structure wherein the lining 114c to be heated in the tank is formed from the inductively active materials or compositions and, for example, if cylindrical in shape, partially surrounds the tank interior volume. It is expected that the bottom of the tank interior will usually have a lower temperature. In Figure 7C. additional inductively active materials or compositions are included in the tank structure at the tank bottom, e.g., 114c, to provide additional heat to the bottom area to achieve a more uniform temperature.

Thus, where the typical high pressure gas tank for motor vehicles is formed from a carbon fiber composite shell (carbon fiber resin polymer, "CFRP") and an internal liner usually formed from aluminum or plastic, the invention allows minor variations in tank composition or limited additions to liner configuration to achieve tank heating. Where, in the typical tank, there is no ferromagnetic material in the tank, in a first instance, a minor change in tank formulation materials is required to obtain induction heating characteristics wherein heat from the induction heater results from eddy currents generated in the material. In a second instance, a separate liner adapts the tank to induction heating. The preferred induction materials and their characteristics are that a) the shell is made electrically non-conductive; b) the shell is made ferromagnetically active; and/or c) the liner is made ferromagnetically active. In this regard, aluminum *pre se* is too low in electrical resistance to be heated up; the electrical resistance of plastic *per se* is too high to be heated up. A CFRP shell composition may be modified, however, to achieve induction heating characteristics by the addition in the fabrication process of a fiber, such as a steel wool strand, or a powder (iron) which has ferromagnetic or conductive properties. Preferred powder materials used in forming the tank wall include a filler that is usually a powder composition characterized by an average particle size diameter ranging from about approximately 0.1×10⁻⁶m to about approximately 500×10⁻⁶m. Where a separate liner is involved, the lining is preferably formed from Fe, SUS, Nichrome®, Ti, Mn, Sn, Ni, Zn, Cr, an alloy of the foregoing, or similar inductively active materials or compositions.

### INDUSTRIAL APPLICABILITY

High pressure CNG or hydrogen gas fueled vehicles powered by engines or fuel cells require an extended driving range, achieved by increasing the quantity of fuel stored in an on board tank. As the quantity of fuel stored is increased, pressure of gas within the tank likewise increases. Temperature fluctuations occur inside and outside on board tanks, that, along with pressure variations occurring during tank refill and depletion and cause mechanical stress in the tank system as a result of the expansion and contraction of the physical components that comprise the tank and any in situ thermal management (heat exchanger) and/or gas flow devices (valves and regulators) that may be installed therein. The decompression of gas as a tank is depleted lowers temperature and produces stress. Additionally, cold temperature, by itself, may induce internal or external leaks. The thermal warming and temperature control system described and claimed is useful to promote gas flow and relieve stresses induced within the tank by the effects of gas heating during refill, gas cooling during tank depletion, and environmental temperature fluctuations. The invention enhances the integrity and durability of the tank system assembly and the gas flow control system associated with the tank assembly.

## Claims

1. A warming system for directly heating a high pressure gas fuel storage system on board a vehicle, comprising:
a vehicle mounted storage tank (114) adapted to contain a high pressure gas fuel for the vehicle consumable during driving of the vehicle, at least a portion of the storage tank (114) being formed of ferromagnetic active material;
an induction coil (250) at least partially circumscribing at least a portion of the storage tank (114);
a power source (300) for supplying an alternating electrical current to the induction coil (250) and creating an alternating electromagnetic field about the storage tank (114), the ferromagnetic material in the storage tank (114) being responsive to the alternating electromagnetic field to generate heat; and
a temperature control system (200), the temperature control system including sensors (T₁, T₂, T₄) for detecting the temperatures of both the storage tank (114) and gas fuel within the tank, the temperature control system being operative to control the temperature of the tank by varying the electrical energy supplied to the induction coil (250) in response to temperatures detected by the sensors (T₁, T₂, T₄).

2. A warming system as claimed in claim 1 wherein the temperature control system (200) is adapted to maintain the temperature of the storage tank (114) above a predetermined minimum temperature (T).

3. A warming system as claimed in claim 1 wherein the ferromagnetic material of the storage tank (114) includes a shell (114a) formed of a polymer fiber composite material with ferromagnetic properties.

4. A warming system as claimed in claim 1 wherein the ferromagnetic material of the storage tank (114) includes a liner (114b, 114c) with ferromagnetic properties.

5. A warming system as claimed in claim 4 wherein the liner (114b, 114c) is formed from one or more metals from the group of iron, stainless steel, titanium, magnesium, tin, nickel, zinc, chromium, aluminum and an alloy of the foregoing.

6. A warming system as claimed in claim 1 wherein the temperature control system (200) includes temperature sensors (T₁, T₂, T₃, T₄) for detecting at least one of a flow control component temperature, a gas temperature, a tank temperature, and an ambient temperature.

7. A warming system as claimed in claim 1 wherein the temperature control system (200) includes temperature sensors (T₁, T₂, T₃, T₄) for detecting a flow control component temperature, a gas temperature, a tank temperature, and an ambient temperature.

8. A warming system as claimed in claim 1 wherein the induction coil (250) is completely external of the storage tank (114).

9. A warming system as claimed in claim 1 wherein the bottom of the storage tank interior (12) includes a partial liner (114c) corresponding to the bottom surface of the storage tank (114), said partial liner (114c) being formed from additional inductively active materials or compositions.

10. A warming system as claimed in claim 1 including a plastic liner (114b) having a non-conductive resistance in the range of over 10⁶ ohm.m.

11. A warming system as claimed in claim 1 including a metal liner (114b) having a resistance of approximately 2.65 × 10⁻⁸ ohm.m.

12. A warming system as claimed in claim 1 wherein a carbon fiber resin polymer shell (114a) forming a wall of the storage tank (114) has a resistance of 1-2 x10⁻⁵ ohm.m.

13. A warming system as claimed in claim 3 wherein the tank shell (114a) includes one or more of a steel wool strand, or an iron powder having ferromagnetic properties.

14. A vehicle comprising a warming system as claimed in any preceding claim.

## Patentansprüche

1. Erwärmungssystem zum direkten Heizen eines Hochdruck-Gaskraftstoffspeichersystems an Bord eines Fahrzeugs, mit
einem fahrzeugseitig befestigten Speichertank (114), der zur Aufnahme eines Hochdruck-Gaskraftstoffs für das Fahrzeug ausgelegt ist, der während der Fahrt des Fahrzeugs verbrauchbar ist, wobei wenigstens ein Abschnitt des Speichertanks (114) aus ferromagnetisch aktivem Material gebildet ist,
einer Induktionsspule (250), die den wenigstens einen Abschnitt des Speichertanks (114) wenigstens teilweise umgibt,
einer Leistungsquelle (300) zum Zuführen eines alternierenden elektrischen Stroms zu der Induktionsspule (250) und zum Erzeugen eines alternierenden elektromagnetischen Felds um den Speichertank (114), wobei das ferromagnetische Material in dem Speichertank (114) auf das alternierende elektromagnetische Feld anspricht, um Wärme zu erzeugen, und
einem Temperatursteuersystem (200), das Sensoren (T₁, T₂, T₄) zum Erfassen der Temperaturen sowohl des Speichertanks (114) als auch des Gaskraftstoffs innerhalb des Tanks aufweist, wobei das Temperatursteuersystem dazu betreibbar ist, die Temperatur des Tanks dadurch zu steuern, dass die zu der Induktionsspule (250) zugeführte elektrische Energie in Reaktion auf durch die Sensoren (T₁, T₂, T₄) erfasste Temperaturen variiert wird.

2. Erwärmungssystem nach Anspruch 1, wobei das Temperatursteuersystem (200) dazu ausgelegt ist, die Temperatur des Speichertanks (114) über einer vorbestimmten Minimaltemperatur (T) zu halten.

3. Erwärmungssystem nach Anspruch 1, wobei das ferromagnetische Material des Speichertanks (114) eine Schalung (114a) aufweist, die aus einem Polymerfaserverbundmaterial mit ferromagnetischen Eigenschaften gebildet ist.

4. Erwärmungssystem nach Anspruch 1, wobei das ferromagnetische Material des Speichertanks (114) eine Auskleidung (114b, 114c) mit ferromagnetischen Eigenschaften aufweist.

5. Erwärmungssystem nach Anspruch 4, wobei die Auskleidung (114b, 114c) aus einem oder mehreren Metallen aus der Gruppe Eisen, rostfreier Stahl, Titan, Magnesium, Zinn, Nickel, Zink, Chrom, Aluminium und Legierungen der vorgenannten Materialien gebildet ist.

6. Erwärmungssystem nach Anspruch 1, wobei das Temperatursteuersystem (200) Temperatursensoren (T₁, T₂, T₃, T₄) zum Erfassen einer Strömungssteuerkomponententemperatur, einer Gastemperatur, einer Tanktemperatur und/oder einer Umgebungstemperatur aufweist.

7. Erwärmungssystem nach Anspruch 1, wobei das Temperatursteuersystem (200) Temperatursensoren (T₁, T₂, T₃, T₄) zum Erfassen einer Strömungssteuerkomponententemperatur, einer Gastemperatur, einer Tanktemperatur und einer Umgebungstemperatur aufweist.

8. Erwärmungssystem nach Anspruch 1, wobei die Induktionsspule (250) vollständig außerhalb des Speichertanks (114) liegt.

9. Erwärmungssystem nach Anspruch 1, wobei der Boden des Speichertankinnenraums (12) eine teilweise Auskleidung (114c) entsprechend der Bodenfläche des Speichertanks (114) aufweist, wobei die teilweise Auskleidung (114c) aus zusätzlichen induktionsaktiven Materialien oder Zusammensetzungen gebildet ist.

10. Erwärmungssystem nach Anspruch 1, mit einer Kunststoffauskleidung (114b), die einen nicht-leitenden Widerstand im Bereich von über 10⁶ ohm.m aufweist.

11. Erwärmungssystem nach Anspruch 1, mit einer Metallauskleidung (114b), die einen Widerstand von etwa 2,65 x 10⁻⁸ ohm.m aufweist.

12. Erwärmungssystem nach Anspruch 1, wobei eine Karbonfaser-Harzpolymer-Schalung (114a), die eine Wand des Speichertanks (114) bildet, einen Widerstand von 1-2 x 10⁻⁵ ohm.m aufweist.

13. Erwärmungssystem nach Anspruch 3, wobei die Tankschalung (114a) einen Stahlwolledraht und/oder ein Eisenpulver mit ferromagnetischen Eigenschaften aufweist.

14. Fahrzeug mit einem Erwärmungssystem nach einem der vorstehenden Ansprüche.

## Revendications

1. Système de réchauffement permettant de chauffer directement un système de stockage de combustible gazeux à haute pression à bord d'un véhicule, comprenant :
un réservoir de stockage (114) monté sur véhicule adapté pour contenir un combustible gazeux à haute pression pour le véhicule pouvant être consommé pendant la conduite du véhicule, au moins une partie du réservoir de stockage (114) étant formée d'un matériau actif ferromagnétique ;
une bobine d'induction (250) encerclant au moins en partie au moins une partie du réservoir de stockage (114) ;
un bloc d'alimentation (300) permettant de fournir un courant électrique alternatif à la bobine d'induction (250) et de créer un champ électromagnétique alternatif autour du réservoir de stockage (114), le matériau ferromagnétique dans le réservoir de stockage (114) étant sensible au champ électromagnétique alternatif pour générer de la chaleur ; et
un système (200) de régulation de température, le système de régulation de température comportant des capteurs (T₁, T₂, T₄) permettant de détecter les températures du réservoir de stockage (114) et du combustible gazeux dans le réservoir, le système de régulation de température étant exploité pour réguler la température du réservoir en faisant varier l'énergie électrique fournie à la bobine d'induction (250) en réponse aux températures détectées par les capteurs (T₁, T₂, T₄).

2. Système de réchauffement tel que revendiqué dans la revendication 1, dans lequel le système (200) de régulation de température est adapté pour maintenir la température du réservoir de stockage (114) au-dessus d'une température minimale prédéterminée (T).

3. Système de réchauffement tel que revendiqué dans la revendication 1, dans lequel le matériau ferromagnétique du réservoir de stockage (114) comporte une virole (114a) formée d'un matériau composite en fibres de plastique avec des propriétés ferromagnétiques.

4. Système de réchauffement tel que revendiqué dans la revendication 1, dans lequel le matériau ferromagnétique du réservoir de stockage (114) comporte une doublure (114B, 114C) avec des propriétés ferromagnétiques.

5. Système de réchauffement tel que revendiqué dans la revendication 4, dans lequel la doublure (114b, 114C) est formée d'un ou de plusieurs métaux du groupe constitué du fer, de l'acier inoxydable, du titane, du magnésium, de l'étain, du nickel, du zinc, du chrome, de l'aluminium et d'un alliage de ceux-ci.

6. Système de réchauffement tel que revendiqué dans la revendication 1, dans lequel le système (200) de régulation de température comporte des capteurs de température (T₁, T₂, T₃, T₄) permettant de détecter au moins l'une parmi une température de composant de régulation de débit, une température de gaz, une température du réservoir et une température ambiante.

7. Système de réchauffement tel que revendiqué dans la revendication 1, dans lequel le système (200) de régulation de température comporte des capteurs de température (T₁, T₂, T₃, T₄) permettant de détecter une température de composant de régulation de débit, une température de gaz, une température du réservoir et une température ambiante.

8. Système de réchauffement tel que revendiqué dans la revendication 1, dans lequel la bobine d'induction (250) est totalement externe au réservoir de stockage (114).

9. Système de réchauffement tel que revendiqué dans la revendication 1, dans lequel le fond de la partie intérieure (12) du réservoir de stockage comporte une doublure partielle (114C) correspondant à la surface inférieure du réservoir de stockage (114), ladite doublure partielle (114C) étant formée de compositions ou de matériaux supplémentaires d'action inductive.

10. Système de réchauffement tel que revendiqué dans la revendication 1, comportant une doublure en plastique (114b) ayant une résistance non conductrice dans la plage de plus de 10⁶ohm.m.

11. Système de réchauffement tel que revendiqué dans la revendication 1, comportant une doublure métallique (114b) ayant une résistance d'environ 2,65x10⁸ ohm.m.

12. Système de réchauffement tel que revendiqué dans la revendication 1, dans lequel la virole (114a) de polymère de résine en fibre de carbone formant une paroi du réservoir de stockage (114) présente une résistance de 1-2x10⁵ ohm.m.

13. Système de réchauffement tel que revendiqué dans la revendication 3, dans lequel la virole (114a) du réservoir comporte un ou plusieurs parmi un brin de laine d'acier ou une poudre de fer ayant des propriétés ferromagnétiques.

14. Véhicule comprenant un système de réchauffement tel que revendiqué dans l'une des revendications précédentes.
